# EUROPÄISCHE PATENTSCHRIFT

(11) **EP 3 288 740 B1**
(45) Veröffentlichungstag und Bekanntmachung des Hinweises auf die Patenterteilung: **06.01.2021**
(21) Anmeldenummer: 16723673.6
(22) Anmeldetag: 28.04.2016
(51) Int. Cl.: B29C 33/30, G05B 19/19, B22D 46/00

(54) **SYSTEM UND VERFAHREN ZUM GIESSEN EINES BAUTEILS**
SYSTEM AND METHOD FOR CASTING A COMPONENT
SYSTEME ET PROCEDE POUR MOULER UN COMPOSANT

(30) Priorität: 29.04.2015 DE 102015106577
(43) Veröffentlichungstag der Anmeldung: 07.03.2018
(73) Patentinhaber: CUBES GmbH, 5020 Salzburg (AT)
(72) Erfinder: MEINDL, Edwin, 9782 Nikolsdorf (AT); FALCH, Christian, 6465 Nassereith (AT)
(74) Vertreter: Dilg, Haeusler, Schindelmann Patentanwaltsgesellschaft mbH
(86) Internationale Anmeldenummer: PCT/EP2016/059554
(87) Internationale Veröffentlichungsnummer: WO 2016/174167

(56) Entgegenhaltungen:
- WO-A1-2011/034434
- US-A- 5 330 343
- US-A- 5 546 313
- US-A- 5 796 620
- US-A- 6 116 888
- US-A1- 2003 130 818
- US-A1- 2008 302 500
- US-A1- 2009 273 109
- US-B1- 6 354 561

## Beschreibung

### Technisches Gebiet

Die vorliegende Erfindung betrifft ein System zum Gießen eines Bauteils mittels eines einstellbaren Formkastens sowie ein Verfahren zum Gießen eines Bauteils mittels eines einstellbaren Formkastens. Ferner betrifft die vorliegenden Erfindung ein Computer lesbare Speichermedium und ein Computerprogramm.

### Hintergrund der Erfindung

Im Werkzeug,- Formen und Modellbau spielen sogenannte "HARD TOOLS" heutzutage immer noch eine große Rolle. Das Grundprinzip dieser Vorrichtungen bilden Blockaufbauten die das Negativ der Konturform des zu spannenden Bauteils wiedergeben.

Diese vollen Blöcke können beispielweise aus Aluminium, Epoxy oder Ureol, bestehen. Je komplexer die Geometrie des dreidimensionalen Modells ist, desto größer ist der Materialverlust in Bezug auf den Rohblock. Bei 3-dimensionalen Modellen aus Ureol müssen diese Blöcke beispielsweise vorher aufwendig zusammengeklebt werden, da Ureolplatten nur in begrenzten Dicken erhältlich sind. Das Zusammenkleben der Ureolplatten ist ein zeitintensiver Arbeitsschritt. Alternativ besteht die Möglichkeit, das dreidimensionale Modell konturnahe zu gießen, sodass weniger Materialverlust und weniger Nachbearbeitungsschritte notwendig sind.

Für den Gießprozess müssen allerdings individuelle Gussformen angefertigt werden, um verschieden geformte Rohblöcke herzustellen.

Zum Einstellen individueller Gussformen werden beispielsweise einstellbare Formkästen bereitgestellt, welche individuell an verschiedene Formen angepasst werden können. Einstellbare Formkästen sind beispielsweise aus der US 6,354, 531 B1, WO 86/02877 A1 und US 5,546,313 bekannt. Dokument US 6354561 B1 offenbart ein System zum Gießen eines Bauteils mittels eines einstellbaren Formkastens, das System aufweisend: eine Erstelleinheit zum Erstellen eines Bauteilmodells des zu formenden Bauteils, die Bestimmungseinheit zum Bestimmen eines Gussformmodells basierend auf dem Bauteilmodell,wobei die Bestimmungseinheit derart konfiguriert ist, dass Einstellungsdaten zum Einstellen des einstellbaren Formkastens basierend auf dem Gussformmodell erstellbar sind, wobei die Bestimmungseinheit derart konfiguriert ist, dass ein Aufmaß zum Festlegen einer späteren Nachbearbeitung des zu gießenden Bauteils einstellbar ist, eine Steuereinheit, welche mit der Bestimmungseinheit derart gekoppelt ist, dass der Steuereinheit die Einstellungsdaten bereitstellbar sind, und den einstellbaren Formkasten, welcher die einstellbare Gussform aufweist, die indikativ für ein Negativprofil des Bauteils ist, wobei die Gussform ausgebildet ist, dass das Bauteil mittels des eingestellten Formkastens gießbar ist, wobei die Steuereinheit derart konfiguriert ist, dass die Steuereinheit den Formkasten basierend auf den Einstellungsdaten mit einer Gussform, welche indikativ für ein Negativprofil des Bauteils ist, einstellt und das Bauteil mittels des eingestellten Formkastens gießbar ist, wobei die Erstelleinheit räumlich von der Steuereinheit getrennt ist.

### Darstellung der Erfindung

Es ist eine Aufgabe der vorliegenden Erfindung, schnell und kostengünstig individuelle Rohblöcke für den Werkzeug,- Formen und Modellbau herzustellen und bereitzustellen.

Diese Aufgabe wird mit einem System zum Gießen eines Bauteils mittels eines einstellbaren Formkastens und mittels eines Verfahrens zum Gießen eines Bauteils mittels eines einstellbaren gemäß den unabhängigen Ansprüchen gelöst.

Gemäß eines ersten Aspekts der vorliegenden Erfindung wird ein System zum Gießen eines Bauteils mittels eines einstellbaren Formkastens beschrieben. Das System weist eine Erstelleinheit zum Erstellen eines Bauteilmodells des zu formenden Bauteils, eine Übermittlungseinheit zum Übermitteln des Bauteilmodells über ein Datennetzwerk zu einer Bestimmungseinheit und die Bestimmungseinheit zum Bestimmen eines Gussformmodells basierend auf dem Bauteilmodell auf. Die Übermittlungseinheit dient zum Übermitteln des Bauteilmodells über ein Datennetzwerk zu der Bestimmungseinheit. Die Bestimmungseinheit ist derart konfiguriert, dass Einstellungsdaten zum Einstellen des einstellbaren Formkastens basierend auf dem Gussformmodell erstellbar sind. Die Steuereinheit ist mit der Bestimmungseinheit derart gekoppelt, dass der Steuereinheit die Einstellungsdaten bereitstellbar sind, wobei die Steuereinheit derart konfiguriert ist, dass die Steuereinheit den Formkasten basierend auf den Einstellungsdaten mit einer Gussform, welche indikativ für ein Negativprofil des Bauteils ist, einstellt und das Bauteil mittels des eingestellten Formkastens gießbar ist.

Gemäß eines ersten Aspekts der vorliegenden Erfindung wird ein Verfahren zum Gießen eines Bauteils mittels eines einstellbaren Formkastens beschrieben. Gemäß dem Verfahren wird ein Bauteilmodell eines zu formenden Bauteils erstellt. Das Bauteilmodell wird über ein Datennetzwerk zu einer Bestimmungseinheit übermittelt. Ein Gussformmodell wird basierend auf dem Bauteilmodell mittels der Bestimmungseinheit erstellt. Ferner werden Einstellungsdaten zum Einstellen des einstellbaren Formkastens basierend auf dem Gussformmodell erstellt, sodass der Formkasten mit einer Gussform, welche indikativ für ein Negativprofil des Bauteils ist, eingestellt wird und das Bauteil mittels des eingestellten Formkastens gegossen werden kann.

Das Bauteil ist beispielsweise ein dreidimensionales Objekt wie es beispielsweise einen Werkzeug-, Form oder Modellblock darstellen kann. Bei dem Bauteil handelte es sich um ein gegossenes Bauteil, welches zum Beispiel aus Ureol oder Aluminium gegossen werden kann.

Der einstellbare Formkasten bildet eine einstellbare Gussform aus. Der einstellbare Formkasten weist beispielsweise einstellbare Formelemente auf, welche derart relativ zueinander verschoben werden können, dass eine gewünschte Gussform, welche mittels des Gussformmodells vorgegeben wird und insbesondere einer Negativform des Bauteils entspricht, eingestellt ist (vgl. Nadelbett). Die einzelnen Formelemente können beispielsweise von der Steuereinheit steuerbar sein, um basierend darauf eine gewünschte Gussform einstellen. Nach Einstellens der Gussform kann diese beispielsweise mit einem Gussmaterial befüllt werden. Nach dem Aushärten des Materials kann das fertige ausgehärtet Bauteil aus der Gussform entnommen werden.

Die einstellbaren Formelemente können beispielsweise dicht gepackt , z.B. aneinander anliegend, vorliegen und z.B. entsprechende Enden der einstellbaren Formelemente, wie beispielsweise Stellstäbe, die Gussform ausbilden. Die einstellbaren Formelemente sind beispielsweise in einem ersten Satz und in einem zweiten Satz ausgebildet, wobei beide Sätze gegenüberliegen. Zwischen den jeweiligen Sätzen an Einstellelementen wird ein Hohlraum gebildet, in welchen die Gussmasse eingefüllt wird. Die Einstellelemente in jedem Satz können einzelnen zueinander verschoben werden, sodass die Enden der jeweiligen Einstellelemente eine gewünschte Form des Hohlraums und somit eine gewünschte Form des auszugießenden Bauteils (d.h. die Gussform, welche indikativ für ein Negativprofil des Bauteils ist) bilden. Die Einstellelemente liegen beispielsweise aufeinander auf, sodass aufgrund der Schwerkraft ein fester Verbund der Einstellelemente zueinander erzeugbar ist. Die Einstellelement können somit aufeinandergelegt werden und benötigen keine komplexen Verbindungsmechanik. Beispielsweise liegen die einzelnen Einstellelemente vertikal übereinander und können jeweils horizontal einzeln oder paarweise zueinander verschoben werden. Die jeweiligen Sätze an Einstellelementen stehen sich beispielsweise horizontal gegenüber und können somit in horizontaler Richtung zueinander oder voneinander fort verschoben werden.

Im Rahmen dieser Anmeldung wird unter dem Begriff "Übertragungseinheit" eine automatisierte und netzwerkbasierte Anordnung aus miteinander kommunizierfähig gekoppelten oder koppelbaren Entitäten verstanden, die Zwischenschaltung einer Bedienperson Daten, z.B. des Bauteilmodells, über das Datennetzwerk übertragen kann. Die Entitäten sind örtlich getrennte Netzwerkelemente, wie beispielsweise Router oder Modems, welche beispielsweise über das Internet als Datennetzwerk kommunikationsfähig miteinander verbunden sind. Die Erstelleinheit kann an eine erste Entität und die Steuereinheit an eine zweite Entität gekoppelt werden.

Die Erstelleinheit ist beispielsweise eine Recheneinheit, welche durch einen Benutzer bedienbar ist und auf welcher das Bauteilmodell des zu formenden Bauteils erstellt werden kann. Auf der Erstelleinheit kann beispielsweise ein CAD-System installiert sein, mit welchen das Bauteilmodell konstruiert werden kann. Dabei können beispielsweise verschiedene Randbedingungen wie Länge, Breite und Höhe berücksichtigt werden. Das Bauteilmodell kann beispielsweise einen Datensatz aufweisen, in welchen Informationen bezüglich der geometrischen Ausstattung, der Materialausgestaltung und/oder der andere Parameter, beispielsweise Temperaturbeständigkeitsparameter oder Säurebeständigkeitsparameter, des zu Formen Bauteils vorliegen.

Der Datensatz kann beispielsweise mittels eines CAD-Programms (Computer Aided Design) auf der Erstelleinheit erzeugt werden. Der Datensatz bildet somit eine dreidimensionale Abbildung des Bauteilmodells.

Im Rahmen dieser Anmeldung wird unter dem Begriff "Bestimmungseinheit" insbesondere eine Einrichtung mit Prozessorressource verstanden, die zum - insbesondere programmtechnischen - Verarbeiten der bereitgestellten Daten des Bauteilmodells konfiguriert ist und die ferner zum Erstellen des Gussformmodells basierend auf dem Bauteilmodell konfiguriert ist. Während dieser Verarbeitung kann die Prozessorressource mit einer Datenspeicherressource der Bestimmungseinheit unidirektional oder vorzugsweise bidirektional kommunizierfähig gekoppelt sein, um von dort Daten einzulesen und/oder auf dieser Daten zu speichern. Die Bestimmungseinheit kann zum Beispiel als ein Computer bzw. Prozessor oder als Mehrzahl von zusammenwirkenden Computern oder Prozessoren (die räumlich beieinander liegen oder voneinander räumlich getrennt sein können) ausgebildet sein.

Auf der Erstelleinheit kann beispielsweise ein CAD-System installiert sein, mit welchem das Bauteilmodell konstruiert werden kann. Dabei können beispielsweise u.a. verschiedene Randbedingungen wie Länge, Breite und Höhe berücksichtigt werden. Mit anderen Worten wird auf der Erstelleinheit ein Modell des Bauteils mit den gewünschten geometrischen Ausgestaltungen erstellt. Der Datensatz, insbesondere die CAD Daten, werden anschließend mittels der Übermittlungseinheit an die Bestimmungseinheit übermittelt.

Ferner erzeugt die Bestimmungseinheit CAM-Daten als Einstellungsdaten zum Einstellen des einstellbaren Formkastens basierend auf dem Gussformmodell. Die Bestimmungseinheit liest beispielsweise die von der Erstelleinheit übermittelten CAD Daten umfassend die Geometriedaten für Rohteil, Fertigteil und Aufspannvorrichtung ein. Falls es erforderlich ist, dass die Geometrie verändert oder neue Geometrie (Modelle) erstellt werden müssen, werden entsprechend neue CAM-Daten generiert. Der Werkstoff und die Einstellung des Formkastens werden bestimmt. Die CAM-Daten berücksichtigen die Randbedingungen und geeignete Verfahrbewegungen und Schnittwerte des Formkastens bzw. der einstellbaren Formelemente. Zum Beispiel werden die im CAM definierten Operationen zusammen mit allen Parametern als "Quellcode" im CAM-Format gespeichert.

Die Bestimmungseinheit, die Steuereinheit, die Übermittlungseinheit und/oder die Erstelleinheit sind zum bidirektionale Datenaustausch ausgebildet und vernetzt. Entsprechend kann beispielsweise die Bestimmungseinheit CAD-Daten des Bauteils erhalten und die daraus generierte CAM-Daten zurück an die Erstelleinheit übermitteln.

Ferner kann aufgrund der bidirektionalen Datenübertragung von der Erstelleinheit zu jedem beliebigen Zeitpunkt eine Statusanfrage an die Bestimmungseinheit und/oder die Steuereinheit übermittelt werden, worauf die Bestimmungseinheit den Status (d.h. den Prozessfortschritt) der Bestimmung des Gussformmodells und/oder die Steuereinheit den Satus (d.h. den Prozessfortschritt) der Einstellung des Formkastens und/oder den Fortschritt des Gießprozesses an die Erstelleinheit zurückübermittelt. Somit kann permanent zu einem gewünschten Zeitpunkt der Prozessfortschritt abgefragt werden.
Die Bestimmungseinheit kann ferner z.B. Volumendaten der Gussform und/oder des Bauteils und auch Daten betreffend Lieferzeit des Bauteils und Kosten der Herstellung des Bauteils bestimmen und an die Einstelleinheit übertragen.

Die Steuereinheit wird ebenfalls insbesondere eine Einrichtung mit Prozessorressource verstanden, die zum - insbesondere programmtechnischen - Verarbeiten der bereitgestellten Daten des Gussformmodells konfiguriert ist und die ferner zum Steuern des Formkastens konfiguriert ist. Während dieser Verarbeitung kann die Prozessorressource mit einer Datenspeicherressource der Steuereinheit unidirektional oder vorzugsweise bidirektional kommunizierfähig gekoppelt sein, um von dort Daten einzulesen und/oder auf dieser Daten zu speichern. Die Steuereinheit kann zum Beispiel als ein Computer bzw. Prozessor oder als Mehrzahl von zusammenwirkenden Computern oder Prozessoren (die räumlich beieinander liegen oder voneinander räumlich getrennt sein können) ausgebildet sein.

Die Steuereinheit ist konfiguriert, basierend auf dem Gussformmodel maschinenlesbare Befehle zu generieren, um damit den Formenkasten einzustellen. Die Steuereinheit ist mit dem einstellbaren Formkasten gekoppelt, sodass das erzeugte Gussformmodell die Gussform in den Formkasten vorgibt. Anschließend kann mittels der Gussform in einem Gießprozess das Bauteil gegossen werden.

Mit der vorliegenden Erfindung kann die Erstelleinheit räumlich getrennt von der Bestimmungseinheit und/oder der Steuereinheit angeordnet werden und mittels der Übermittlungseinheit gekoppelt werden. Somit kann entfernt von der Bestimmungseinheit ein Bauteilmodell erstellt werden und an der entfernten Bestimmungseinheit und Steuereinheit verarbeitet werden. Der einstellbare Formkasten ist am Ort der Steuereinheit angeordnet. Mit anderen Worten kann somit dezentral an einer Erstelleinheit ein Bauteilmodell erzeugt werden und zentral mit einem Formkasten das Bauteil gegossen werden. Insbesondere können mehrere Erstelleinheiten mit ein und derselben Bestimmungseinheit und/oder Steuereinheit über entsprechende Übermittlungseinheiten gekoppelt werden, sodass eine Vielzahl von verschiedenen Bauteilmodellen, welche am Ort der Erstelleinheit erstellt wurden, an ein- und demselben Ort, an welchem der Formkasten angeordnet ist, verarbeitet werden und mittels des Formkastens gegossen werden.

Somit können gerade beim Werkzeug,- Formen oder Modellbau die erforderlichen Kosten zur Erstellung eines Rohblockes reduziert werden, da es nicht länger notwendig ist, am Ort der Erstelleinheit einen entsprechenden Formkasten bereitzustellen. Mit der vorliegenden Erfindung kann ein- und derselbe Formkasten verschiedene Bauteilmodelle aus verschiedenen Erstelleinheiten verarbeiten. Somit kann der Hardwareeinsatz und entsprechend die Kosten deutlich reduziert werden, da statt einer Vielzahl von Formkästen lediglich ein Formkasten ausreichen kann, um die Vielzahl von Bauteilmodell aus verschiedensten Erstelleinheit zu verarbeiten.

Gemäß einer weiteren beispielhaften Ausführungsform ist die Bestimmungseinheit derart konfiguriert, dass ein Material des zu gießenden Bauteils einstellbar ist. Der Benutzer kann beispielsweise direkt auf der Erstelleinheit oder mittels einer Eingabemaske der Steuereinheit Materialparameter eingeben. Dabei kann der Benutzer via des Datennetzwerks die Eingabemaske der Steuereinheit bedienen.

Erfindungsgemäß ist die Bestimmungseinheit derart konfiguriert, dass ein Aufmaß des zu gießenden Bauteils einstellbar ist. Insbesondere dient ein Aufmaß dazu, eine gewünschte spätere Nachbearbeitung des Bauteils festzulegen. Das Aufmaß kann in verschiedene Dimensionen, beispielsweise in z-Richtung erfolgen.

Die Bestimmungseinheit kann basierend auf den CAD-Daten des Bauteils selbsttätig bestimmte Aufmaßgrößen bestimmen. Ferner kann bei einer bidirektionalen Datenübertragung zwischen der Bestimmungseinheit das von der Bestimmungseinheit bestimmte Aufmaß an die Erstelleinheit übermittelt werden. Ferner kann ein Aufmaß an der Erstelleinheit vorgegebenen und an die Bestimmungseinheit übermittelt werden.

Erfindungsgemäß ist die Erstelleinheit räumlich von der Bestimmungseinheit und/oder Steuereinheit getrennt.

Erfindungsgemäß weist das System ferner den einstellbaren Formkasten auf, welcher die einstellbare Gussform aufweist, die indikativ für ein Negativprofil des Bauteils ist. Die Gussform ist ausgebildet, dass das Bauteil mittels des eingestellten Formkastens gießbar ist.

Gemäß einer weiteren beispielhaften Ausführungsform ist die Steuereinheit derart konfiguriert ist, dass eine Fertigungszeit und eine Lieferzeit des gegossenen Bauteils zu einer Lieferadresse bestimmbar bzw. auslesbar sind. An der Lieferadresse liegt in einer beispielhaften Ausführungsform auch die Erstelleinheit vor. In einer weiteren beispielhaften Ausführungsform liegt die Erstelleinheit räumlich getrennt von der Lieferadresse vor.

Gemäß eines weiteren nicht separat beanspruchten Aspekts der vorliegenden Erfindung wird ein computerlesbares Speichermedium beschrieben, in dem ein Programm zum Gießen eines Bauteils mittels eines einstellbaren Formkastens gespeichert ist. Das computerlesbare Speichermedium weist, wenn es von einem Prozessor (z.B. der Bestimmungseinheit) ausgeführt wird, folgende Verfahrensschritte auf:
- Bestimmen eines Gussformmodells basierend auf einem Bauteilmodell wobei das Bauteilmodells indikativ zu dem zu formende Bauteils ist und das Bauteilmodell über ein Datennetzwerk übermittelbar ist,
- Bestimmen von Einstellungsdaten zum Einstellen des einstellbaren Formkastens basierend auf dem Gussformmodell, sodass der Formkasten mit einer Gussform, welche indikativ für ein Negativprofil des Bauteils ist, eingestellt wird und das Bauteil mittels des eingestellten Formkastens gießbar ist.

Gemäß eines weiteren nicht separat beanspruchten Aspekts der vorliegenden Erfindung wird ein Computerprogramm zum Gießen eines Bauteils mittels eines einstellbaren Formkastens beschreiben. Das Computerprogramm ist, wenn es von einem Prozessor ausgeführt wird, zum Durchführen des oben beschriebenen Verfahrens zum Gießen eines Bauteils mittels eines einstellbaren Formkastens eingerichtet.

Das Computerprogramm kann als computerlesbarer Anweisungscode in jeder geeigneten Programmiersprache wie beispielsweise in JAVA, C++, .net, C# etc. implementiert sein. Das Computerprogramm kann auf einem computerlesbaren Speichermedium (CD-ROM, DVD, Blu-ray Disk, Solid-Disk, Wechsellaufwerk, flüchtiger oder nicht-flüchtiger Speicher, eingebauter Speicher/Prozessor etc.) abgespeichert sein. Der Anweisungscode kann einen Computer oder andere programmierbare Geräte, wie beispielsweise die Erstelleinheit und/oder die Steuereinheit, dass die gewünschten Funktionen ausgeführt werden. Ferner kann das Computerprogramm in dem Datennetzwerk, wie beispielsweise dem Internet (z.B. Website basiert, oder Cloud basiert), bereitgestellt werden, von dem es bei Bedarf von einem Nutzer bedient oder heruntergeladen werden kann.

Die Erfindung kann sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 zeigt eine schematische Darstellung des Systems zum Gießen eines Bauteils mittels eines einstellbaren Formkastens gemäß einer beispielhaften Ausführungsform der vorliegenden Erfindung, und
Fig. 2 zeigt eine schematische Darstellung eines Prozessschaubilds eines Verfahrens zum Gießen eines Bauteils mittels eines einstellbaren Formkastens gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

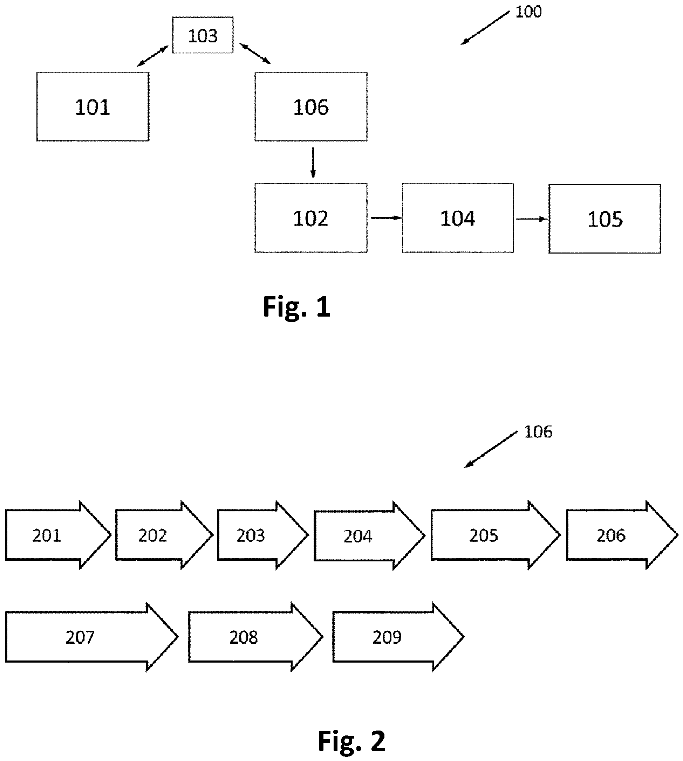

**Fig. 1** zeigt eine schematische Darstellung des Systems 100 zum Gießen eines Bauteils 105 mittels eines einstellbaren Formkastens 104 gemäß einer beispielhaften Ausführungsform der vorliegenden Erfindung. Eine Erstelleinheit 101 dient zum Erstellen eines Bauteilmodells des zu formenden Bauteils 105. Eine Übermittlungseinheit 103 dient zum Übermitteln des Bauteilmodells über ein Datennetzwerk zu einer Bestimmungseinheit 106. Die Bestimmungseinheit 106 dient zum Bestimmen eines Gussformmodells basierend auf dem Bauteilmodell. Die Bestimmungseinheit 106 ist derart konfiguriert, dass Einstellungsdaten zum Einstellen des einstellbaren Formkastens 104 basierend auf dem Gussformmodell erstellbar sind. Eine Steuereinheit 102 ist mit der Bestimmungseinheit 106 derart gekoppelt, dass der Steuereinheit 102 die Einstellungsdaten bereitstellbar sind, wobei die Steuereinheit 102 derart konfiguriert ist, dass die Steuereinheit 102 den Formkasten 104 basierend auf den Einstellungsdaten mit einer Gussform, welche indikativ für ein Negativprofil des Bauteils 105 ist, einstellt und das Bauteil 105 mittels des eingestellten Formkastens 104 gießbar ist.

Die Erstelleinheit 101 ist dabei räumlich getrennt von der Steuereinheit 102 und/oder der Bestimmungseinheit 106 angeordnet. Die Übermittlungseinheit 103 koppelt die Erstelleinheit 101 mit der Bestimmungseinheit 106. Beispielsweise kann mittels der Übermittlungseinheit 103 eine Datenübermittlung via des Internets bereitgestellt werden.

Die Erstelleinheit 101 ist beispielsweise eine Recheneinheit, welche durch einen Benutzer bedienbar ist und auf welcher das Bauteilmodell des zu formenden Bauteils erstellt werden kann. Auf der Erstelleinheit 101 ist beispielsweise ein CAD-System installiert, mit welchen das Bauteilmodell konstruiert werden kann. Dabei können beispielsweise verschiedene Randbedingungen wie Länge, Breite und Höhe berücksichtigt werden.

Die Bestimmungseinheit 106 ist mit der Übermittlungseinheit 103 und ferner mit der Steuereinheit 102 und dem einstellbaren Formkasten 104 gekoppelt, sodass mittels des erzeugten Gussformmodells die Gussform in den Formkasten 104 von der Steuereinheit 102 eingestellt wird. Anschließend kann mittels der Gussform in einem Gießprozess das Bauteil 105 gegossen werden. Das Bauteilmodell kann somit entfernt von der Bestimmungseinheit 106 bzw. der Steuereinheit 102 mittels der Erstelleinheit 101 erstellt werden und an der entfernten Bestimmungseinheit 106 bzw. Steuereinheit 102 verarbeitet werden. Der einstellbare Formkasten 104 ist am Ort der Steuereinheit 102 angeordnet. Mit anderen Worten kann dezentral an einer Erstelleinheit 101 ein Bauteilmodell erzeugt werden und zentral mit einem einstellbaren Formkasten 104 das Bauteil 105 gegossen werden. Insbesondere können mehrere Erstelleinheiten 101 mit ein- und derselben Bestimmungseinheit 106 bzw. der Steuereinheit 102 über entsprechende Übermittlungseinheiten 103 gekoppelt werden, sodass eine Vielzahl von verschiedenen Bauteilmodellen, welche am Ort der Erstelleinheit 101 erstellt wurden, an ein- und demselben Ort, an welchem der Formkasten 104 angeordnet ist, verarbeitet werden und mittels des Formkastens 104 gegossen werden.

**Fig. 2** zeigt eine schematische Darstellung eines Prozessschaubilds eines Verfahrens zum Gießen eines Bauteils 105 mittels eines einstellbaren Formkastens 104 gemäß einer beispielhaften Ausführungsform der vorliegenden Erfindung. Die einzelnen Verfahrensschritte können beispielsweise in der Bestimmungseinheit 106 bzw. der Steuereinheit 102 ablaufen. Vorab wird das Bauteilmodell in der Erstelleinheit 101 erstellt und mittels der Übermittlungseinheit 103 an die Bestimmungseinheit 106 übermittelt.

In der Bestimmungseinheit 106 kann beispielsweise in einem nächsten Schritt die Materialauswahl 201 getroffen werden. Dies kann beispielsweise über eine Eingabemaske ermöglicht werden, welche durch den Benutzer bedient wird. Beispielsweise kann der Benutzer über ein Internetportal die Eingabemaske bedienen.

Anschließend wird in Schritt 202 die Daten des Bauteilmodells verarbeitet. Ferner kann in Schritt 203 ein Aufmaß des Bauteils definiert werden. Die Aufmaßdefinition 203 kann ebenfalls beispielsweise über die Eingabemaske in der Bestimmungseinheit 106 erfolgen. Insbesondere dient ein Aufmaß dazu, eine gewünschte spätere Nachbearbeitung festzulegen. Das Aufmaß kann in verschiedene Dimensionen, beispielsweise in z-Richtung erfolgen. In Verfahrensschritt 204 werden Steuerbefehle für den einstellbaren Formkasten mittels der Steuereinheit 102 basierend auf den Einstellungsdaten des Gussformmodells erstellt. Mittels der Einstellungsdaten des Gussformmodells wird der einstellbare Formkasten 104 eingestellt.

Ferner kann basierend auf den eingegebenen Parametern, wie beispielsweise der geometrischen Abmessungen des Bauteils oder der Materialzusammensetzung, die Fertigungszeit bzw. Lieferzeit in Schritt 205 bestimmt werden. Ferner kann die Bestimmungseinheit 106 basierend auf den Bauteilparametern und basierend auf der Auftragsmenge an zu fertigenden Bauteilen die Lieferzeit exakt bestimmen. Anschließend können mittels der Bestimmungseinheit 106 die Produktdaten in Schritt 206 zusammengefasst und erstellt werden.

Mittels des nun eingestellten Formkastens 104 wird das Bauteil produziert bzw. gegossen. Anschließend wird das Bauteil 105 in Schritt 208 geliefert und in Schritt 209 abgerechnet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: System
- 101: Erstelleinheit
- 102: Steuereinheit
- 103: Übermittlungseinheit
- 104: Formkasten
- 105: Bauteil
- 106: Bestimmungseinheit

- 201: Materialauswahl
- 202: Datenverarbeitung des Bauteilmodells
- 203: Aufmaßdefinition
- 204: Steuerdaten für Formkasten
- 205: Bestimmung Fertigungszeit/Lieferzeit
- 206: Produktdaten erstellen
- 207: Produktion/Gießen des Bauteils
- 208: Lieferung des Bauteils
- 209: Abrechnung

## Patentansprüche

1. System (100) zum Gießen eines Bauteils (105) mittels eines einstellbaren Formkastens (104), das System (100) aufweisend:
eine Erstelleinheit (101) zum Erstellen eines Bauteilmodells des zu formenden Bauteils (105),
eine Übermittlungseinheit (103) zum Übermitteln des Bauteilmodells über ein Datennetzwerk zu einer Bestimmungseinheit (106),
die Bestimmungseinheit (106) zum Bestimmen eines Gussformmodells basierend auf dem Bauteilmodell,
wobei die Bestimmungseinheit (106) derart konfiguriert ist, dass Einstellungsdaten zum Einstellen des einstellbaren Formkastens (104) basierend auf dem Gussformmodell erstellbar sind,
wobei die Bestimmungseinheit (106) derart konfiguriert ist, dass ein Aufmaß zum Festlegen einer späteren Nachbearbeitung des zu gießenden Bauteils (105) einstellbar ist,
eine Steuereinheit (102), welche mit der Bestimmungseinheit (106) derart gekoppelt ist, dass der Steuereinheit (102) die Einstellungsdaten bereitstellbar sind, und
den einstellbaren Formkasten (104), welcher die einstellbare Gussform aufweist, die indikativ für ein Negativprofil des Bauteils (105) ist,
wobei die Gussform ausgebildet ist, dass das Bauteil (105) mittels des eingestellten Formkastens (104) gießbar ist,
wobei die Steuereinheit (102) derart konfiguriert ist, dass die Steuereinheit (102) den Formkasten (104) basierend auf den Einstellungsdaten mit einer Gussform, welche indikativ für ein Negativprofil des Bauteils (105) ist, einstellt und das Bauteil (105) mittels des eingestellten Formkastens (104) gießbar ist,
wobei die Erstelleinheit (101) räumlich von der Steuereinheit (102) getrennt ist,
wobei die Übermittlungseinheit (103) die Erstelleinheit (101) mit der Bestimmungseinheit (106) zum bidirektionalen Datenaustausch derart koppelt,
dass von der Erstelleinheit (101) zu einem beliebigen Zeitpunkt eine Statusanfrage an die Bestimmungseinheit (106) und/oder die Steuereinheit (102) übermittelbar ist, worauf von der Bestimmungseinheit (106) der Status der Bestimmung des Gussformmodells und/oder von der Steuereinheit (102) der Status der Einstellung des Formkastens (104) und/oder der Fortschritt des Gießprozesses an die Erstelleinheit (101) zurückübermittelbar ist.

2. System (100) gemäß Anspruch 1,
wobei die Bestimmungseinheit (106) derart konfiguriert ist, dass ein Material des zu gießenden Bauteils (105) einstellbar ist.

3. System (100) gemäß Anspruch 1 oder 2,
wobei die Bestimmungseinheit (106) derart konfiguriert ist, dass eine Fertigungszeit und eine Lieferzeit des gegossenen Bauteils (105) zu einer Lieferadresse bestimmbar sind.

4. Verfahren zum Gießen eines Bauteils (105) mittels eines einstellbaren Formkastens (104) mit einem System gemäß einem der Ansprüche 1 bis 3.

## Claims

1. System (100) for casting a component (105) by an adjustable molding box (104), wherein the system (100) comprises:
a generating unit (101) for generating a component model of the component (105) to be molded,
a transmitting unit (103) for transmitting the component model via a data network to a determination unit (106),
the determination unit (106) for determining a casting mold model based on the component model,
wherein the determination unit (106) is configured such that adjusting data for adjusting the adjustable molding box (104) are generatable based on the casting mold model,
wherein the determination unit (106) is configured such that a measurement for specifying a subsequent post treatment of the component (105) to be casted is adjustable,
a control unit (102) which is coupled with the determination unit (106) such that the adjusting data are providable to the control unit (102), and
the adjustable molding box (104) which comprises the adjustable casting mold which is indicative for a negative profile of the component (105),
wherein the casting mold is configured such that the component (105) is castable by the adjusted molding box (104),
wherein the control unit (102) is configured such that the control unit (102) adjusts the molding box (104) based on the adjusting data with a casting mold which is indicative for a negative profile of the component (105) and the component (105) is castable by the adjusted molding box (104),
wherein the generating unit (101) is spatially separated from the control unit (102), wherein the transmitting unit (103) is coupling the generating unit (101) with the determination unit (106) for a bidirectional data exchange such that at an arbitrary point of time a status request is transmittable from the generating unit (101) to the determination unit (106) and/or the control unit (102), whereupon from the determination unit (106) the status of the determination of the casting mold model and/or from the control unit (102) the status of the adjustment of the molding box (104) and/or the progress of the casting process is transmittable back to the generating unit (101).

2. System (100) according to claim 1,
wherein the determination unit (106) is configured such that a material of the component (105) to be casted is adjustable.

3. System (100) according to claim 1 or 2,
wherein the determination unit (106) is configured such that a manufacturing time and a delivery time of the casted component (105) to a delivery address are determinable.

4. Method of casting a component (105) by an adjustable molding box (104) by a system according to one of the claims 1 to 3.

## Revendications

1. Système (100) pour couler un composant (105) au moyen d'une boîte de moulage (104) réglable, le système (100) comprenant :
une unité de génération (101), permettant de générer un modèle du composant (105) à mouler,
une unité de transmission (103), permettant de transmettre le modèle de composant via un réseau de données à une unité de détermination (106),
l'unité de détermination (106), permettant la détermination d'un modèle de moule de coulée sur la base du modèle du composant,
l'unité de détermination (106) étant configurée de telle sorte que des données de réglage pour régler la boîte de moulage (104) réglable sont aptes à être générées sur la base du modèle de moule de coulée,
l'unité de détermination (106) étant configurée de telle sorte qu'une surdimension puisse être déterminée pour un post-traitement ultérieur du composant (105) à couler,
une unité de commande (102), qui est reliée à l'unité de détermination (106) de telle sorte que les données de réglage puissent être fournies à l'unité de commande (102), et
la boîte de moulage réglable (104), qui comprend le moule réglable, étant indicatrice d'un profil négatif du composant (105),
le moule étant tel que le composant (105) peut être coulé au moyen de la boîte de moulage (104) réglée,
l'unité de commande (102) étant configurée de telle sorte que l'unité de commande (102) règle la boîte de moulage (104) sur la base des données de réglage avec un moule indiquant un profil négatif du composant (105), et le composant (105) étant apte à être coulé au moyen de la boîte de moulage (104) réglée,
l'unité de génération (101) étant séparée spatialement de l'unité de commande (102),
l'unité de transmission (103) reliant l'unité de génération (101) à l'unité de détermination (106) pour un échange de données bidirectionnel de telle sorte qu'une demande d'état est apte à être transmise, à tout moment souhaité, de l'unité de génération (101) à l'unité de détermination (106) et/ou à l'unité de commande (102), après quoi l'état de détermination du modèle de moule de coulée est apte à être retransmis à l'unité de génération (101) par l'unité de détermination (106) et/ou l'état du réglage de la boîte de moulage (104) et/ou la progression du processus de coulée est apte à être retransmis à l'unité de génération (101) par l'unité de commande (102).

2. Système (100) selon la revendication 1,
dans lequel l'unité de détermination (106) est configurée de telle sorte qu'un matériau du composant (105) à couler soit réglable.

3. Système (100) selon la revendication 1 ou la revendication 2,
dans lequel l'unité de détermination (106) est configurée de telle sorte qu'un temps de production et un temps de livraison du composant moulé (105) à une adresse de livraison soient modulables.

4. Procédé de moulage d'un composant (105) au moyen d'une boîte de moulage (104) réglable ayant un système selon l'une des revendications 1 à 3.
